(19) Europäisches Patentamt / European Patent Office / Office européen des brevets

(11) **EP 4 685 477 A1**

(12) **EUROPEAN PATENT APPLICATION**

(43) Date of publication:
**28.01.2026 Bulletin 2026/05**

(21) Application number: **24382802.7**

(22) Date of filing: **23.07.2024**

(51) International Patent Classification (IPC):
**G01N 29/12** (2006.01) **G01N 29/24** (2006.01)
**G01N 29/42** (2006.01) **G01N 29/46** (2006.01)
**B64D 15/20** (2006.01) **B64D 15/22** (2006.01)
**F03D 80/40** (2016.01)

(52) Cooperative Patent Classification (CPC):
**B64D 15/20; F03D 80/405; G01N 29/12;
G01N 29/2437; G01N 29/42; G01N 29/4436;
G01N 29/46;** B64D 15/22; G01N 2291/0251;
G01N 2291/106

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Instituto Nacional De Tecnica Aeroespacial
"Esteban Terradas"
28850 Torrejón de Ardoz (ES)**
• **Consejo Superior De Investigaciones Científicas
-
CSIC
28006 Madrid (ES)**
• **Leibniz-Institut für Festkörper- und
Werkstoffforschung Dresden
01069 Dresden (DE)**

(72) Inventors:
• **GONZÁLEZ DEL VAL, Miguel
28850 Torrejón de Ardoz (ES)**

• **MORA NOGUÉS, Julio
28850 Torrejón de Ardoz (ES)**
• **GARCÍA GALLEGO, Paloma
28850 Torrejón de Ardoz (ES)**
• **CARREÑO PUERTAS, Francisco
28850 Torrejón de Ardoz (ES)**
• **BORRÁS MARTOS, Ana Isabel
28006 Madrid (ES)**
• **RODRÍGUEZ GONZÁLEZ- ELIPE, Agustin
28006 Madrid (ES)**
• **DEL MORAL JALÓN, Jaime
28006 Madrid (ES)**
• **SÁNCHEZ VALENCIA, Juan Ramón
28006 Madrid (ES)**
• **RICO GAVIRA, Víctor Joaquín
28006 Madrid (ES)**
• **WINKLER, Andreas
01069 Dresden (DE)**

(74) Representative: **TRBL Intellectual Property
Plaza de Castilla 3, 7°A
28046 Madrid (ES)**

(54) **SYSTEM AND METHOD FOR DETECTING ICE ACCRETION**

(57) The present invention relates to a system (1) for detecting icing conditions. The system (1) comprises a plurality of piezoelectric crystals (2, 2', 2"), a vector network analyser (3), and a processing means (4). A pair of electrodes (5) is connected to each piezoelectric crystal (2, 2', 2"). The piezoelectric crystals (2, 2', 2"), by means of the electrode (5) pairs thereof, are connected in parallel to each other and to the vector network analyser (3). The vector network analyser (3) is configured to scan the response of the piezoelectric crystals in the frequency domain by generating electric signals suitable for producing acoustic waves in each piezoelectric crystal (2, 2', 2"), and by periodically measuring a set of resonance data for each piezoelectric crystal and to send the sets of resonance data to the processor (4). The processor (4) is configured to receive, from the vector network analyser (3), the sets of resonance data and to calculate, using the sets of resonance data, an indicator of ice accretion, a value of ice accretion rate, an indicator of the severity of the ice event and an indicator of the droplet size.

EP 4 685 477 A1

**(Cont. next page)**

Figure 1

## Description

### FIELD OF THE INVENTION

The present invention belongs to the technical field of systems and methods for detecting and discriminating ice accretion on a surface by using piezoelectric crystals.

### BACKGROUND OF THE INVENTION

Ice layers are typically formed on airframes that are exposed to freezing precipitation, supercooled fog, or cloud droplets. The premature detection of said ice accretion is crucial in the field of aeronautics. On the one hand, having reliable ice detecting systems increases the flight safety. On the other hand, said reliable ice detecting systems also allow to reduce energy consumption, since anti-icing systems would be only activated when the ice is detected on the airframe.

The evaluation of the environmental atmospheric conditions around an aeronautic body (these atmospheric conditions comprising, i.a., the icing severity and the size of droplets surrounding the body) plays a key role in aeronautical ice detection. Icing severity is typically associated to the ice accretion rate (i.e., the thickness of accreted ice per unit time) on the body surface. If enough ice is accreted on an aerofoil, its geometry changes, leading to a decrease in aerodynamic performance, which can affect safety. Furthermore, said amount of accreted ice per second leads to an increase in the roughness of the aerofoil's surface, thus increasing drag. The ice accretion process is different depending on many factors like temperature, airframe geometry, droplet size, airspeed, etc.

Beyond the accretion rate, there are more criteria which help to define the atmospheric conditions around a body. One of them is the type of aeronautical icing events: glaze icing and rime icing. In the case of a glaze icing event (also called "wet regime"), there is a coexistence of a liquid water film and an ice layer on the airframe's surface. Indeed, in a glaze icing event, ice is not spontaneously formed, and a film of liquid water is present before the ice formation. In contrast, in the case of a rime icing event, when water droplets impact the airframe's surface, they instantly change of phase, such that ice accretion is instantaneous.

Another criterion is the droplet size. During a flight, the water impingement on the aircraft's surface increases with the size of the droplets surrounding said aircraft's surface. In particular, the largest droplets tend to impinge onto large areas downstream the leading edge of the wings of an aircraft. Consequently, the presence of large droplets surrounding an aircraft increases the probability of a fatal accident during a flight, caused by the icing derived from the water impingement associated to said large droplets. In this context, to ensure operational safety, an aircraft must be protected against certain icing conditions, which are typically defined in the US regulations, 14 CFR, Part 25, Appendix C (*Federal Aviation Administration (FAA). 14 CFR Appendix C to Part 25*) and Appendix O (*Federal Aviation Administration (FAA), 2016, 14 CFR Appendix O to Part 25 - Supercooled Large Drop Icing Conditions, January 1*). Appendix C conditions deal with small size droplets (i.e., spectra maximum drop diameters smaller than 100 $\mu$m), while Appendix O conditions deal with large size droplets (i.e., spectra maximum drop diameters equal or larger than 100 $\mu$m). Moreover, within Appendix O conditions, two different situations are further distinguished: Freezing Drizzle (FZDZ) and Freezing Rain (FZRA). The FZDZ conditions deal with spectra maximum drop diameters from 100$\mu$m to 500 $\mu$m, while the FZRA conditions deal with spectra maximum drop diameters larger than 500 $\mu$m. Notice that, when Appendix O conditions take place, the aircraft must immediately leave the droplet cloud surrounding thereof, so that fatal consequences are avoided.

Nevertheless, common aircraft ice detection systems are generally not certified in Appendix O. In this regard, an exception is found in M. González et al., "Fiber Bragg Grating Sensors ice detection: Methodologies and performance", Sensors and Actuators A: Physical, Volume 346, 113778 (2022). This article discloses an ice detection system suitable for equipping aircrafts. The system comprises a plurality of fibre Bragg grating sensors, FBGSs, disposed on the leading edge and on the upper surface of an aerofoil-form probe. Thus, the FBGSs are distributed in different points of said aerofoil-form probe, so that the system is configured to measure temperature changes along the leading edge and the upper surface of said aerofoil-form probe. In this respect, when ice is formed on a FBGS, there is a temperature step in the sensor signal which depends on the FBGS position along the aerofoil-form probe. As a result, the system of M. González et al. is configured to discriminate between Appendix C and Appendix O conditions surrounding the probe. In addition, M. González et al. studies the performance of the system disclosed therein. In particular, it is studied its capability for determining the type of icing events taking place on the FBGSs, as well as some characteristic of the test clouds leading to said icing events, such as the ice accretion rate, and the liquid water content, LWC, which measures the amount of liquid water surrounding the probe. In this regard, however, the system of M. González et al. exhibits a poor accuracy. On the one hand, the system fails in classifying several icing events, by erroneously identifying them as glaze icing events. On the other hand, as it is disclosed therein, the errors in determining the LWC and the ice accretion rate are so large that the system can only perform a mere an approximate icing severity assessment.

In view of the above, there is a need in the field of aeronautics for providing an alternative system suitable for detecting the atmospheric conditions around a body with higher accuracy.

## BRIEF DESCRIPTION OF THE INVENTION

The present invention overcomes the above limitations of the prior art, by providing a system suitable for detecting ice accretion, according to claim 1.

In a first inventive aspect, the invention relates to a system suitable for detecting icing conditions, the system comprising

a plurality of piezoelectric crystals;
a plurality of pairs of electrodes wherein each pair of electrodes is connected to one of the piezoelectric crystals so that every pair of electrodes has a corresponding piezoelectric crystal;
a vector network analyser; and
a processor,
wherein
the pairs of electrodes are connected in parallel to each other and to the vector network analyser;
the vector network analyser is configured to scan the response of the piezoelectric crystals in the frequency domain by generating electric signals suitable for producing acoustic waves in each piezoelectric crystal, by periodically measuring a set of resonance data for each piezoelectric crystal and to send the sets of resonance data to the processor; and
the processor is configured to receive, from the vector network analyser, the sets of resonance data and to calculate, using the sets of resonance data, an indicator of ice accretion, a value of ice accretion rate, an indicator of the severity of the ice event and an indicator of the droplet size.

The system of the invention comprises a single vector network analyser (VNA) that consists of a signal generator and a receiver that scans over a frequency range and measures the amplitude and phase of the reflected signal from the system of piezoelectric crystals and uses these values to calculate a complex return loss S parameter as a function of frequency of the electrical signal scanned by the receiver. In the present invention, the said S parameter is denoted as $S_{11}$ following the common labelling for sharp peaks at given values of frequencies. These values correspond to the frequencies of the acoustic resonance vibrational modes characteristic of the used piezoelectric crystal. The intensity of the recorded $S_{11}$ peaks defines the relative effectiveness by which each acoustic resonance mode of the piezoelectric crystal will be excited by any externally applied electrical signal set at the specific frequency(ies) of resonance modes identified with the VNA. In the present invention, through the recording of $S_{11}$ vs frequency spectra, the VNA is used to monitor the time evolution of frequency and intensity of the acoustic resonance modes of one or more piezoelectric crystals connected in parallel and exposed to icing conditions. When a piezoelectric crystal of the system resonates, its insertion loss spectrum, $S_{11}$, vs. frequency plot, comprises at least one peak at a given resonance frequency. In this configuration, the VNA produces low intensity acoustic waves in each piezoelectric crystal and is also configured to measure the resonant responses of said piezoelectric crystals subjected to said acoustic waves, due to the parallel connection established between the VNA and the electrodes pairs. An example of resonance data of a piezoelectric crystal includes, but is not limited to, the dependence of $S_{11}$ peak intensity (insertion loss) as a function of frequency.

The elasticity of the piezoelectric crystals of the system varies when water droplets imping said piezoelectric system and when an ice layer is accreted on said piezoelectric crystal as a result of said impingement. This mass and elasticity variation cause changes in the resonance curve of the piezoelectric crystal. For instance, when water drops imping the piezoelectric crystal, the value of the peak intensity of the resonance curve gets attenuated. Likewise, when ice is accreted on said piezoelectric crystal, the value of the resonance frequency associated to the peak of the resonance curve is notably shifted. The piezoelectric crystals act, therefore, as transducers. Hence, the sets of resonance data of each piezoelectric crystal comprise information about atmospheric events taken place on said each respective piezoelectric crystal. These data are sent to the processor.

As used herein, the term "processor" refers to one or more processing devices, programs, circuits, components, systems or any combination thereof, whether implemented in hardware, software, and/or firmware, and whether or not it is programmable. In particular embodiments of the invention, the processing means at least includes a microprocessor, an on-board computer, or a combination thereof. In particular embodiments of the invention, the on-board computer comprises the on-board computer of an aircraft.

This processor is configured to use the sets of resonance data to calculate different indicators. The processor uses the data from the VNA to determine the intensity of the peak resonance value and the frequency where this peak is located, for each piezoelectric crystal. Since the VNA establishes a periodic measurement of the resonance data, the processor is able to detect any change in the intensity and/or position of said peak. A first indicator of ice accretion rate is calculated based on the shift in the position of the peak and its intensity, an indicator of the severity of the ice event is calculated by comparing the resonance data of the different crystals and an indicator of the droplet size is also determined by comparing the resonance data of the different crystals. Details of the calculations will be provided below.

The indicators obtained by the processor will be used as specific indicators to assess icing conditions.

In the above context, the system of the present invention advantageously solves the problem in the field of aeronautics of providing an alternative system suitable for detecting ice accretion with higher accuracy. The indicators calculated by the processor provides a more accurate and complete scenario which allows the detection of any eventual icing event taking place on the piezoelectric crystals and to derive information about the environment in which the system of the invention is embedded.

In some particular embodiments, each piezoelectric crystal comprises a first surface and a second surface opposed to the first surface, and wherein each pair of electrodes is connected to the second surface of the corresponding piezoelectric crystal in a lateral field excitation configuration.

The lateral field excitation configuration implies placing the corresponding pair of electrodes in the same surface. This configuration allows a thickness shear mode excitation, which is optimal for the detection of the parameters in the present invention, because in this mode the wave moves along the direction of thickness and makes the crystal mainly vibrate in the shear plane defined by the surface opposite to the electrodes.

The first and second surfaces are substantially planar. In this context, the expression "substantially planar" means that the surface of the piezoelectric crystal is planar, aside from deviations inherent to the fabrication of the piezoelectric crystal. In those cases where the first and second surfaces are coated or protected, this condition affects to the coated surface.

In some particular embodiments, the system further comprises attaching means configured to attach each piezoelectric crystal to a body, wherein the attaching means are configured to leave the first surface of the piezoelectric crystals exposed to an environment in which said body is embedded and are also configured to allow free oscillation of the corresponding piezoelectric crystal.

In particular embodiments of the invention, the attaching means of the system comprises one or more holders, one or more plates, one or more pockets, one or more holes, one or more fixers, one or more screws, one or more nuts, or a combination thereof.

In some particular embodiments, the system further comprises an excitation module comprising at least one signal generator and a switching device, wherein

the processor is connected to the at least one signal generator;
at least one of the pairs of electrodes is connected to one of the signal generators;
the processor is configured to control the at least one signal generator to generate one or more electric signals and to send the one or more electric signals to one or more of the piezoelectric crystals; and
the vector network analyser and the at least one signal generator are connected to the processing means through the switching device, so that the switching device controls the connection of the processing means with the vector network analyser and with the at least one signal generator.

The above signal generator is an external module different to the internal signal generator of the VNA of the system and can be set at the specific frequencies of the resonant modes of the piezoelectric crystals determined by the VNA. The signal generator of the excitation module provides the system with de-icing capabilities: when the high intensity acoustic signal at the frequency detected by the VNA is applied to one piezoelectric crystal of the system, said piezoelectric crystal resonates, so that the eventual ice accreted on thereof can be removed.

The processor is connected to the signal generator to control it, based on at least part of the resonance data of the sets received from the VNA, so that the signal generator is configured to generate the one or more electrical signals with updated acoustic resonance frequencies of the piezoelectric crystals, taking into account the change from the frequency values of the original acoustic resonant modes of bear crystals due to the accretion of ice thereon.

As used herein, the expression "switching device" refers to a device enabling or interrupting the flow of electrical current. In particular embodiments of the invention, the switching device comprises a switch or a relay.

This switching device is used to disconnect the processing unit from the VNA and to connect it to the signal generator (connected to the amplifier), so that the processing means sets up the signal generator to apply one or more electric signals to each of said one or more piezoelectric crystals. After the application of said one or more electric signals, the processing means can connect back to the VNA.

In some particular embodiments, the excitation module further comprises at least one amplifier configured to amplify the one or more electric signals generated by the signal generator, and/or a power source configured to power the signal generator and/or the amplifier.

In some particular embodiments, all the piezoelectric crystals have the same nominal thickness.

"The same nominal thickness" means that the crystals are acquired or manufactured with the same thickness, while, due to the tolerances associated to the manufacturing process, the actual thickness may not be exactly identical or may present small imperfections along its length.

The advantage of having the same thickness for each crystal is that the range needed in the VNA to monitor the resonance responses of the crystals are all of them comprised in a narrow range of frequencies, thus reducing the measuring time of the VNA.

In some particular embodiments, at least one of the piezoelectric crystals have a coating, wherein the coating comprises, for example, polyurethane, polyurethane with microfillers, polyurethane with nanofillers or other coatings with specific protective or hydrophobic functionalities.

Polyurethane coatings are similar to the one used in some aeronautical surfaces, but at the same time does not interfere in the detection of the deposition of ice in the piezoelectric crystals. Hence, the same situation that is happening in the aeronautical surface is reproduced in the piezoelectric crystal. Furthermore, a protective coating protects the fragile surface of the crystals.

In some particular embodiments, the processor comprises a communication configured to send data to an external computer.

In a second inventive aspect, the invention provides a sensing arrangement comprising

> a body;
> a plurality of attaching means; and
> a system according to any of the first inventive aspect, wherein each piezoelectric crystal is installed in one different point of the body by means of the attaching means.

By installing each piezoelectric crystal in a different point of the body, different measurements are obtained and, by comparing these results, the indicators of ice accretion, ice accretion rate, the indicator of the severity of the ice event and the indicator of the droplet size may be calculated, as will be detailed below.

In some particular embodiments,

> the body is an aerofoil comprising a leading edge, an upper surface and a lower surface;
> the body comprises a main conduct which creates a fluid communication between the leading edge and an interior point of the body;
> a first piezoelectric crystal is installed in the interior point;
> at least a second piezoelectric crystal is installed in the upper surface of the body;
> the body comprises a secondary conduct which creates a fluid communication between the interior point and the upper surface.

A main duct is aimed to create in the first piezoelectric crystal conditions of the flow in the infinite, ensuring that the flow lines are straight. Straight flow lines contribute to make the collection efficiency be near to 1 by achieving a homogeneous layer. The fact that a first piezoelectric crystal is installed in the interior point, which reproduces the infinite conditions, and a second piezoelectric crystal is installed in the upper surface allows the processor to calculate the indicator of the severity of the ice event and the indicator of the droplet size.

In some particular embodiments, more than one piezoelectric crystal is installed in the upper surface of the body.

When more than one piezoelectric crystal is installed in the upper surface of the body, a more detailed information about the deposition of different sizes of droplets is obtained. In Appendix O conditions, two different situations are distinguished: Freezing Drizzle (FZDZ) and Freezing Rain (FZRA). The FZDZ conditions deal with spectra maximum drop diameters from $100\mu m$ to $500\ \mu m$, while the FZRA conditions deal with spectra maximum drop diameters larger than $500\ \mu m$. Since larger droplets will deposit in locations of the aerofoil which are farther from the leading edge, placing crystals in farther locations will allow the detection of this larger drops and allow the discrimination between FZDZ and FZRA. Angle of attack and True Air Speed (TAS) are also useful in some cases to perform these calculations, so in some particular embodiments, the processor receives these data.

In some particular embodiments, the sensing arrangement further comprises at least one electrical heater installed in the main conduct, wherein the heater is connected to the power source by means of the switch.

A heater is used when ice clogs the main conduct, to recover the operation of the same. If heater is always on, it could contaminate the measurement in the first piezoelectric crystal (it might induce some increase in temperature above that of the environment), so it is advantageous that, if necessary, the heater can be used independently from the de-icing abilities based on acoustic waves.

In some particular embodiments, the first piezoelectric crystal is oriented with the main planar surface perpendicular to the chord. This optimizes the reception of droplets.

In some particular embodiments, the auxiliary conduct turns the flow 90° with respect from the direction of the main conduct. Thanks to the auxiliary conduct, the impingement of eventual water droplets comprised in the aforementioned air flux is further ensured.

In some particular embodiments, at least one piezoelectric crystal is made of one of the following: LiNbOa, LiTaOa, BaTiOa, KNbOa, PbTiOa, $HfO_2$, ZnO, lead zirconate titanate (PZT), lead zinc niobate - lead titanate (PZN-PT), lead magnesium niobate - lead-titanate (PMN-PT), polyvinylidene fluoride (PVDF), or Polyvinylidene fluoride-trifluoroethylene (PVDF-TrFE).

In some particular embodiments of the invention, one of the electrodes of the electrode pair of each piezoelectric crystal, the vector network analyser, the signal generator, the amplifier, the power source, and/or the one or more heaters are connected to ground.

In a second aspect, the invention presents a method for detecting icing conditions around a body in the sensing arrangement according to any one of claims 8 to 11, the method comprising the following steps:

> a) the vector network analyser periodically scans the response of the piezoelectric crystals in the frequency domain by sending electric signals to the electrodes to cause acoustic waves in the piezoelectric crystals;
> b) the vector network analyser periodically measures a set of resonance data from the electrode pairs associated with the piezoelectric crystals and periodically sends the sets of resonance data to the processor;

c) the processor calculates, using the sets of resonance data, an indicator of ice accretion for each piezoelectric crystal by comparing two consecutive sets of resonance data of the same piezoelectric crystal and detecting any change of the frequency of a resonance peak.

As explained above, the presence of ice in a piezoelectric crystal causes a change in the resonance response, in particular a shift in the frequency value where the peak is located. By detecting this change (e.g., establishing a threshold over which the difference of frequency values is enough), the presence of ice (an indicator of ice accretion) can be ascertained.

In some particular embodiments, the method further comprising a step

d) the processor calculates, using the sets of resonance data, a value of ice accretion rate for each piezoelectric crystal, by comparing two consecutive sets of resonance data of the same piezoelectric crystal and detecting any change between the resonance frequency value of one set and the resonance frequency value of the other set.

The ice accretion rate measures the growing speed of the ice layer on the surface. This is related to the shift speed of the resonance frequency peak. The peak shifts from a nominal frequency vale to a different frequency value while ice is being accreted. Depending on the type of icing event, this evolution may be also accompanied by a decrease in the intensity of the $S_{11}$ parameter at the varying resonance frequency. By measuring this shift speed, the ice accretion rate can be determined.

In some particular embodiments, the method further comprising a step wherein the processor calculates, using the sets of resonance data, an indicator of the severity of the ice event by using a plurality of ice accretion rates.

The severity of the icing event may be defined in ranges of the accretion rate, e.g., in the criteria provided by the Federal Aviation Administration (FAA) of the USA federal government (see FAA, "Icing Terminology", 68 Federal Register 24542, May 7, 2003): when the ice accretion rate is comprised in a first range, the severity can be defined as "trace", and then, there are further ranges for "light", "moderate", "heavy" and "severe". In some cases, the range are defined in inches (of ice) per mile, so the vehicle speed is also required to calculate the severity in these cases.

In some particular embodiments, the method further comprising a step

e) the processor calculates, using the sets of resonance data, an indicator of the type of the icing event by using a plurality of ice accretion rates.

A glaze icing event takes place on a piezoelectric crystal when water drops imping the piezoelectric crystal but ice accretion only occurs a time interval after said impingement. In this first interval, the resonance frequency value barely changes while the value of the insertion loss at the resonance frequency value gets attenuated. After said time interval, ice is suddenly accreted on the piezoelectric crystal. causing a sudden shift in the resonance frequency value. On the other hand, a rime icing event takes place on a piezoelectric crystal when the water drops impinging at least part of said piezoelectric crystal spontaneously change their phase: there is no time interval between the attenuation in the peak and the shift of resonance frequency value. To distinguish between the rime icing event and glaze icing event, the processor measures the time interval between the attenuation in the peak and the shift in the resonance frequency value. Since the device of the present invention is able to discriminate between a water film and ice accretion, it is able to identify glace icing event and rime icing event.

In some particular embodiments, the method further comprising a step

f) the processor calculates, using the sets of resonance data, an indicator of the droplet size by using the sets of resonance data of more than one piezoelectric crystal.

When the leading edge of an aerofoil is subjected to an air flow, the water drops comprised therein imping the leading edge independently of their size. While the flow moves far from the leading edge, the streamlines become less sharp, and only bigger drops imping on the surface. These bigger drops are captured by piezoelectric crystals which are far from the leading edge. By comparing the drops received in different points of the upper surface, the size of the drops can be ascertained.

As shown above, by knowing the drop size, an icing condition can be defined. This icing condition includes at least one of the following: appendix C condition, appendix O condition, Freezing Drizzle (FZDZ) condition, Freezing Rain (FZRA) condition.

In particular embodiments, the system further comprises an excitation module with a signal generator, the processing means is connected to the signal generator, each electrode pair is connected to the signal generator and the processing means is configured to control the signal generator and the method further comprises the following steps:

g) the processing means controls the signal generator to generate one or more resonant acoustic signals, based on information obtained in step c);
h) the signal generator applies the one or more resonant acoustic signals to the piezoelectric crystals for which the presence of accreted ice is determined; and
i) repeat at least steps a) to c).

In these last embodiments of the invention, the method advantageously allows the removal of ice from the piezoelectric crystals determined in step c).

The method is based on the periodical sending of electric signals and the measurement of the resonance spectrum. These measurements are sent to the processor and the processor calculates the indicators. The steps of sending, measuring and processing can be realized simultaneously and independently.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

**BRIEF DESCRIPTION OF THE DRAWINGS**

The foregoing and other features and advantages will be more fully understood from the detailed description of the invention, as well as from the embodiments referring to the attached figures, which are described in the following paragraphs, wherein:

Figure 1 shows a schematic representation of a system according to an embodiment of the invention.

Figure 2 shows a schematic representation of a sensing arrangement according to another embodiment of the invention, wherein the sensing arrangement comprises a system according to Figure 1.

Figure 3 shows the conditions of the air stream in the configuration provided by Figure 2.

Figure 4 shows a first set of results of a sensing arrangement according to the invention, such as the one shown in Figure 2.

Figures 5 shows a second scenario of operation of a sensing arrangement according to the invention, such as the one shown in Figure 2.

Figure 6 shows a different scenario from the one of Figure 5, in the same sensing arrangement of the invention.

Figure 7 shows a schematic representation of a different embodiment of a sensing arrangement according to the invention.

Numerical references used in the drawings

In order to provide a better understanding of the technical features of the invention, the referred Figures are accompanied by the following numerical references:

| 1 | System |
|---|--------|

(continued)

| 2 | First piezoelectric crystals |
|---|---|
| 2' | Second piezoelectric crystal |
| 2" | Third piezoelectric crystal |
| 2''' | Fourth piezoelectric crystal |
| 3 | Vector network analyser/VNA |
| 4 | Microprocessor |
| 5 | Electrodes |
| 6 | Signal generator |
| 7 | Amplifier |
| 8 | Power source |
| 9 | Heaters |
| 10 | Relay |
| 11 | External element |
| 12 | Probe |
| 20 | Main conduct |
| 20', 20" | Openings of the main conduct |
| 21 | Auxiliary conduct |
| 21', 21" | Openings of the auxiliary conduct |
| 22 | Stream lines |

**DETAILED DESCRIPTION OF THE INVENTION**

In the present section, a set of embodiments according to present invention are described by way of examples, which are to be construed as merely illustrative and not limitative of the scope of the invention.

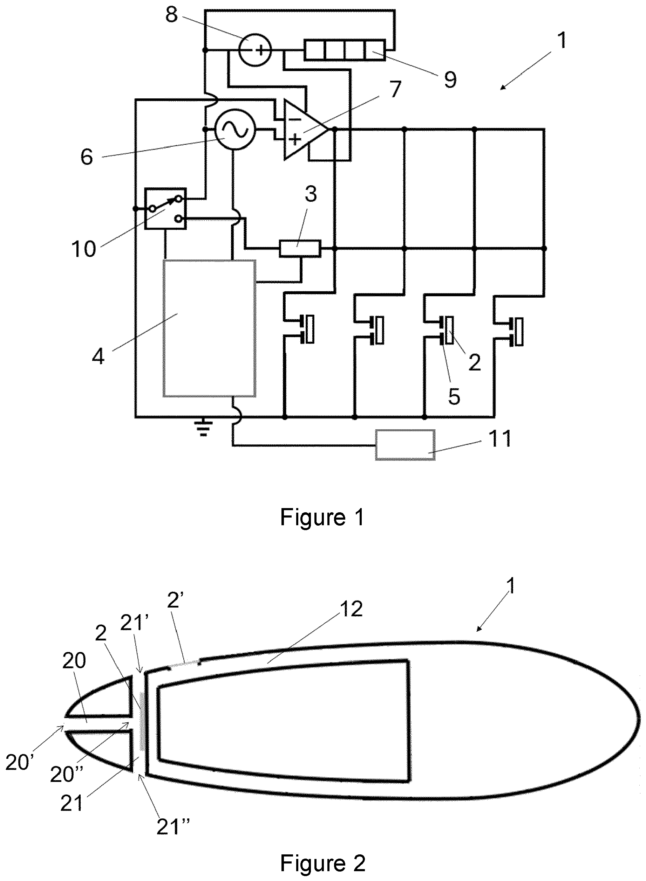

Figure 1 shows a schematic representation of a system (1) according to an embodiment of the invention. Said system (1) comprises four piezoelectric crystals (2), a vector network analyser VNA (3) and a microprocessor (4). As it can be seen therein, a pair of electrodes (5) is connected to each piezoelectric crystal (2) so that the piezoelectric crystals (2), by means of the electrode pairs (5), are connected in parallel to each other and to the VNA (3).

The VNA (3) comprises an internal signal generator of variable frequency, so that the VNA (3) is configured to scan the frequency and generate acoustic waves in each piezoelectric crystal (2) by means of the corresponding electrode pair (5). These acoustic waves result from the resonant excitation of each each piezoelectric crystal (2). The VNA (3) is further configured to measure the resonance curves of each piezoelectric crystals associated to the resonant excitation resulting from the acoustic waves, wherein each resonance curve comprises a set of resonance data.

As also seen in Figure 1, the microprocessor (4) is connected to the VNA (3), so that it is configured to receive, from the VNA (3), the sets of resonance data of each piezoelectric crystals (2). The microprocessor (4) is also configured to process the sets of resonance data received from the VNA (3) and calculate some indicators, as will be described below.

The system (1) of Figure 1 further comprises an excitation module, wherein said excitation module comprises a signal generator (6), an amplifier (7), and a power source (8).

Each piezoelectric crystal (2), by means of its electrode pair (5), is connected to the signal generator (6). The microprocessor (4) is also connected to the signal generator (6) to control the signal generator (6), so that said signal generator (6) may generate one or more electrical radiofrequency signals capable of exciting the crystals and generate acoustic waves at some of their specific resonance frequencies. In addition, the signal generator (6) is further configured to apply said one or more electrical signals to one or more of the piezoelectric crystals (2).

It is to be noted that signal generator (6) of the excitation module is different to the internal signal generator of the VNA (3), since the function of each of said signal generators is totally different: the function of the internal signal generator of the VNA (3) is, through the scanning of the frequency space, to assist said VNA (3) in the determination of the resonance data of the piezoelectric crystals (2), while the signal generator (6) of the excitation module is mainly meant to provide de-icing capabilities to the system (1). When an electrical signal with the required power is generated by the signal generator (6) of the excitation module and is applied to one piezoelectric crystal (2), said piezoelectric crystal (2) acoustically resonates so that the ice accreted on thereof may be removed. Thus, whenever the expression "signal generator" is used in the present document, it will refer to a signal generator (6) different to the internal signal generator of the VNA (3), unless explicitly stated otherwise.

If the processor (4) determines the presence of accreted ice on one or more piezoelectric crystals (2), said microprocessor (4) controls the signal generator (6) to generate one or more electrical signals with updated resonance frequencies (since the processor has updated information, provided by the VNA, of the acoustic resonance frequency values of each piezoelectric crystal), for the one or more piezoelectric crystals (2) which has accreted ice. The amplifier (7) is configured to amplify the one or more electrical signals generated by the signal generator (6). The amplifier (7) and the signal generator (6) are both powered by the power source (8) of the excitation module. The system (1) of Figure 1 further comprises a plurality of heaters (9), that are also powered by the power source (8). These heaters (9) are suitable for preventing and/or avoiding the accretion of ice in particular elements in some embodiments of the invention, as it will be described later on.

Additionally, the system (1) of Figure 1 further comprises a switch (10). The VNA (3) and the signal generator (6) are connected to the microprocessor (4) through said switch (10), so that the microprocessor (4) is configured to alternatively connect to the VNA (3) or the signal generator (6). In particular, after determining the presence of accreted ice on one or more piezoelectric crystals (2), the microprocessor (4), by means of the switch (10), is configured to disconnect the microprocessor (4) from the VNA (3) and to connect it to the signal generator (6). Then, the microprocessor (4) sets up the signal generator (6) to apply one or more electrical signals at the frequencies of the resonance acoustic modes of each of said one or more piezoelectric crystals (2). After the application of the one or more electrical signals, the microprocessor (4), by means of the switch (10), is disconnected from the signal generator (6) and connected back to the VNA (3) to track the current resonance conditions of the crystals.

The microprocessor (4) is further configured to send information to an external element (11), this information being associated to at least one of any determination performed by said microprocessor (4) that is described in the present section. In the particular embodiment of Figure 1, the external element (11) and the microprocessor (4) are connected by means of a wired connection. In alternative embodiments of the invention, the processing means (4) of the system (1) are wirelessly connected to the external element (11). A non-limiting example of external element (11) may be an on-board computer of an aircraft, or an air-traffic control tower.

Figure 2 shows a schematic representation of a sensing arrangement according to the invention. This sensing arrangement comprises an aerofoil probe (12) and a system as shown in Figure 1. A first piezoelectric crystal (2) is installed in a first point and a second piezoelectric crystal (2') is installed on the upper surface of the aerofoil probe (12). The rest of the elements of the system are not shown in Figure 2, for the sake of simplicity.

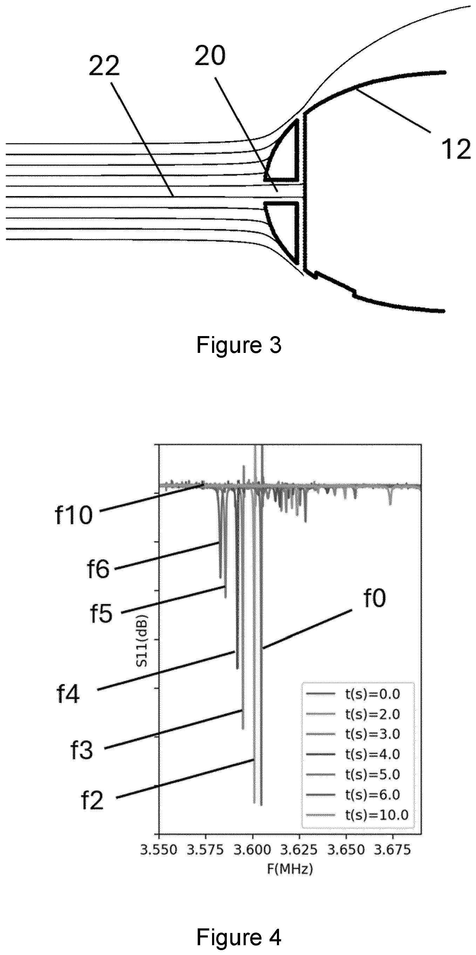

The probe (12) comprises a main conduct (20) which is straight and parallel to the chord of the probe (12). This main conduct has an entry opening (20') and an exit opening (20") and ends in the first point, where the first piezoelectric crystal (2) is installed. This configuration allows the first point to reproduce the conditions of the stream in infinite upstream locations, which will simplify further calculations, as will be shown in Figure 3.

The probe also comprises an auxiliary conduct (21) which allows the stream entering the main conduct (20) exit again by the openings (21', 21") to the upper and/or lower surface after being curved 90°. Thus, the impingement of water droplets comprised in the aforementioned air flux entering the main conduct is further enhanced.

The heaters (9) of the system are located in the main conduct (20). As described above, they can be activated by the microprocessor (4) in order to prevent the main conduct (20) from being blocked by the accretion of ice inside thereof. They will be deactivated once that the microprocessor (4) detects that a condition for deactivation is met.

The probe (12) can therefore be mounted to a structure, such as a part of an aircraft that may be subjected to the accretion of ice on thereof (e.g., a wing). In particular, the probe (12) comprises a plate (not shown) in the second portion of the same, which is suitable for being attached, by means of holders or equivalent attaching means, to the said part of the aircraft.

As mentioned above, Figure 3 shows the representation of the stream lines (22) when facing the aerofoil probe (12) of Figure 2. As can be seen in this image, the stream lines (22) entering the main conduct (20) follow the conditions in the infinite upstream.

Figure 4 shows a first scenario of operation of a sensing arrangement according to the invention, such as the one shown in Figure 2.

In this case, the VNA periodically sends electric signals to the piezoelectric crystals to periodically scan their acoustic response and measures their acoustic resonance frequencies. When ice is accreted on the piezoelectric crystal, the measurement is shown in Figure 4. Figure 4 corresponds to successive measurements in the form of $S_{11}$ spectra recorded for the same piezoelectric crystal but at different ice accretion times. Conditions for this test are: LWC = 0.14 g/m^3; T = -2°C and air speed = 40 m/s. Measurement in t=0.0 corresponds to an initial state when no ice has been accreted, while measurements in t=2.0 to 10.0 correspond to measurements where ice is being accreted. As can be seen, the resonance $S_{11}$ peak of each piezoelectric crystal is sensitive to the accretion of ice: when ice is accreted on a piezoelectric crystal, its elastic properties change and the value of the resonance frequency associated with the resonance mode of said piezoelectric crystal is shifted. As can be seen, the variation of the $S_{11}$ peak with time (both in intensity and in frequency value) is represented: f0 corresponds to the peak in t=0, f2 corresponds to the peak in t = 2 s, and successively until f10.

The processor, when receiving this data from the VNA, determines that ice is being accreted on the corresponding piezoelectric crystal.

In further steps, the processor may determine the ice accretion rate, since the VNA provides the evolution of the resonance frequency value with time. The ice accretion rate, which is a measure of the increment of mass with time, is related with the variation of the resonance frequency value with time, by means of the expression:

$$\frac{\partial \tau}{\partial t} = \frac{\sqrt{\mu_c \rho_c}}{-2 f_{01} \rho_{ice}} \frac{A}{A_{acc}} \frac{\partial f}{\partial t}$$

wherein $f_{01}$ is the initial resonance frequency value, A is the area of resonance, $\rho_c$ is the density of the crystal, $\rho_{ice}$ is the density of ice, $A_{acc}$ is the area of accretion and $\mu_c$ is the shear stiffness of the crystal. Since the crystal is collimated, ice is not accreted in the whole area of resonance, and A is therefore greater than $A_{acc}$.

By analysing the evolution of the ice accretion rate, which can be done by the processor, an indicator of the severity of the ice event can be calculated.

The severity of the icing event may be defined in ranges of the accretion rate, e.g., in the criteria provided by the Federal Aviation Administration (FAA) of the USA federal government (see FAA, "Icing Terminology", 68 Federal Register 24542, May 7, 2003): when the ice accretion rate (measured in inches of ice per hour) is comprised in a first range, the severity can be defined as "trace", and then, there are further ranges for "light", "moderate", "heavy" and "severe". In some cases, the range are defined in inches (of ice) per mile, so the vehicle speed is also required to calculate the severity in these cases.

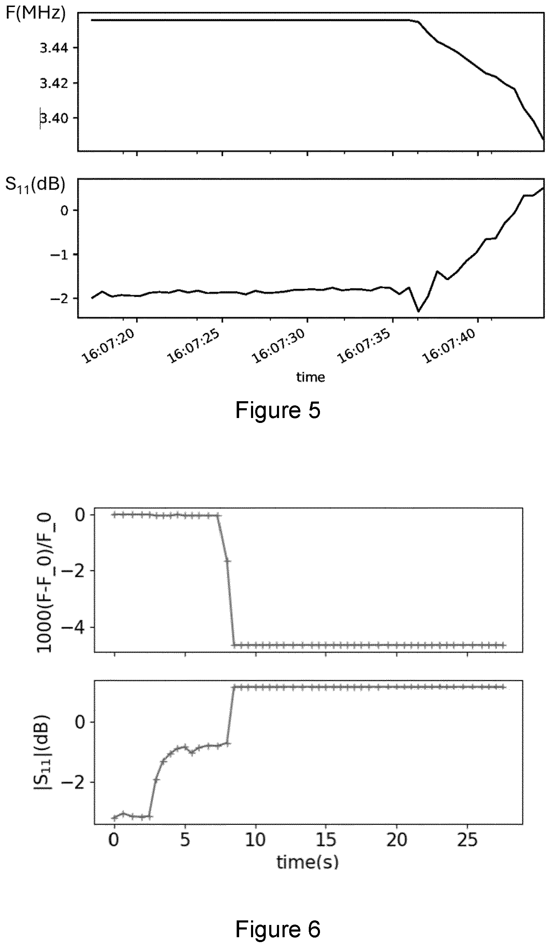

Figures 5 shows a second scenario of operation of a sensing arrangement according to the invention, such as the one shown in Figure 2.

This scenario shows this sensing arrangement being subjected to a fogging reproducing certain appendix C and rime conditions.

When a rime icing event takes place on a piezoelectric crystal, the water drops impinging on at least part of said piezoelectric crystal spontaneously change their phase: ice accretion and impingement of the drops occur simultaneously. As a result, the attenuation in the peak (reduction of $S_{11}$ intensity values at the resonance peak) due to the drop impingement and the reduction of resonance frequency value due to ice accretion take place at the same time, as shown in Figure 5.

In these cases, the microprocessor compares the time spans of the reduction of the peak intensity and the shift in frequency value. If the time scales of these two phenomena coincide, a rime icing event is defined.

Figure 6 shows a different scenario from the one of Figure 5, using the same sensing arrangement of the invention.

This scenario corresponds to a sensing arrangement of the invention, such as the one of Figure 2, being subjected to a fogging event reproducing specific appendix C and glaze conditions.

When a glaze icing event takes place on a piezoelectric crystal, water drops impinge on said piezoelectric crystal, but ice accretion only occurs a time interval after said impingement. After said time interval, ice is suddenly accreted on the piezoelectric crystal. As a result, in the time interval before ice is accreted, the resonance frequency value barely changes while the value of the peak of the resonance curve at the resonance frequency value gets attenuated. In addition, when ice is suddenly accreted after said time interval, the resonance frequency value shifts.

This can be observed in Figure 6: the attenuation in the peak (reduction of the values of S11) takes place in a first instance, and the shift in frequency is sudden and takes place some seconds after.

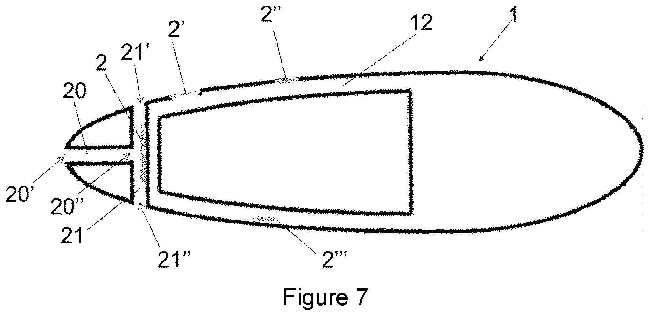

Figure 7 shows a schematic representation of a different embodiment of a sensing arrangement according to the invention. This sensing arrangement is similar to the one shown in Figure 2, but the aerofoil probe (12), in addition to the first piezoelectric crystal (2) and the second piezoelectric crystal (2'), further comprises a third piezoelectric crystal (2") and a fourth piezoelectric crystal (2''').

In this case, the size of the drops is going to be measured. To do so, more than one piezoelectric crystal must be installed in the upper surface of the probe, in addition to the first piezoelectric crystal, which is installed in the leading edge.

In this example, the "second" piezoelectric crystal is installed in the upper surface of the probe, but near the leading edge, and the "third" piezoelectric crystal is installed in the upper surface of the probe, but far from the leading edge. The distance between the second and third piezoelectric crystals depends on the shape of the probe and on the flight conditions. The fourth piezoelectric crystal is not exposed to ice impingement and is used to provide a temperature value, which is useful when used in combination with other indicators to discriminate between glace icing event and rime icing event. This is because, when no ice is accreted on the crystal (and this is achieved by not leaving the crystal exposed to ice impingement), a lineal relation can be established between the location of the peak and the temperature. Hence, by measuring the position of the peak, the temperature can be calculated.

Due to the shape of the streamlines, the larger drops (above 500 $\mu$m) will impact on first, second and third crystals, since they are heavy enough to exit the main streamline and impinge on the probe surface. However, smaller drops (with a diameter of about 100 $\mu$m) will only impact on the crystals which are closer to the leading edge since, while the streamlines advance in the profile of the probe, they are less sharp, and lighter drops follow the lines instead of depositing on the probe surface.

Hence, when drop impingement is detected (by means of an attenuation of the $S_{11}$ peak intensity) on the first and second piezoelectric crystals but not on the third, it means that the drops are small (with a diameter of about 100 $\mu$m). This is equivalent to say that Appendix O conditions are met, but there is no Freezing Rain (FZRA), but Freezing Drizzle (FZDZ). If drop impingement is detected in all first, second and third piezoelectric crystals, it means that the drops are large (more than 500 $\mu$m), Appendix O conditions are met and there is Freezing Rain (FZRA). Hence, by using the described method with these three crystals, Appendix O conditions may be discriminated, and also the conditions of Freezing Drizzle (FZDZ) or Freezing Rain (FZRA) may be identified. In some cases, in this analysis, the true airspeed (TAS) data and/or the angle of attack of the aerofoil are also used. Said TAS data and/or the angle of attack of the aerofoil may be provided by a flight-data acquisition unit (FDAU) connected to the microprocessor.

When ice saturation is detected (i.e., when the peak in the values of $S_{11}$ at the resonance frequency becomes completely attenuated and its frequency value does not experience further shifts), the switching device is used to disconnect the processing unit from the VNA and to connect it to the signal generator, so that the processing means sets up the signal generator to apply one or more resonant acoustic signals to each of said one or more piezoelectric crystals. After the application of said one or more electric signals at the resonant conditions, the processing means can connect back to the VNA for further detection of icing conditions. The VNA detects if de-icing conditions are still needed and, if necessary, repeats the de-icing cycle. If not, the VNA remains connected for further operation.

As a particular example, in this case, the second and third piezoelectric crystals have a polyurethane coating. This coating mimics the painted surfaces of the airplanes and helps to protect the fragile surface of the crystals. Polyurethane coatings are similar to the one used in aeronautical surfaces, but at the same time some formulations of this coating do not interfere in the detection of the deposition of ice on the piezoelectric crystals. Hence, a similar surface termination than that of typical aeronautical surfaces is reproduced in the piezoelectric crystal. In some formulations, the coating may comprise, for example, polyurethane with microfillers, polyurethane with nanofillers or other coatings with specific protective or hydrophobic functionalities.

**Claims**

1. A system (1) suitable for detecting icing conditions, the system (1) comprising

   a plurality of piezoelectric crystals (2, 2', 2"),
   a plurality of pairs of electrodes (5) wherein each pair of electrodes (5) is connected to one of the piezoelectric crystals (2, 2', 2") so that every pair of electrodes (5) has a corresponding piezoelectric crystal (2, 2', 2");
   a vector network analyser (3); and
   a processor (4);
   wherein
   the pairs of electrodes (5) are electrically connected in parallel to each other and to the vector network analyser (3);
   the vector network analyser (3) is configured to scan the response of the piezoelectric crystals in the frequency domain by generating electric signals suitable for producing acoustic waves in each piezoelectric crystal (2, 2', 2"), and by periodically measuring a set of resonance data for each piezoelectric crystal and to send the sets of resonance data to the processor (4); and
   the processor (4) is configured to receive, from the vector network analyser (3), the sets of resonance data and to calculate, using the sets of resonance data, an indicator of ice accretion, a value of ice accretion rate, an indicator of the severity of the ice event and an indicator of the droplet size.

2. System according to claim 1, wherein each piezoelectric crystal (2, 2', 2") comprises a first surface and a second surface opposed to the first surface, and wherein each pair of electrodes (5) is connected to the second surface of the corresponding piezoelectric crystal (2, 2', 2") in a lateral field excitation configuration.

3. The system (1) according to any one of the preceding claims, further comprising an excitation module comprising at least one signal generator (6) and a switching device (10), wherein

the processor (4) is connected to the at least one signal generator (6),
at least one of the pairs of electrodes (5) is connected to one of the signal generators (6),
the processor (4) is configured to control the at least one signal generator (6) to generate one or more electrical signals and to send the one or more electrical signals to one or more of the piezoelectric crystals (2, 2', 2"); and
the vector network analyser (3) and the at least one signal generator (6) are connected to the processing means (4) through the switching device (10), so that the switching device (10) controls the connection of the processing means (4) with the vector network analyser (3) and with the at least one signal generator (6).

4. The system (1) according to claim 3, wherein the excitation module further comprises at least one amplifier (7) configured to amplify the one or more electrical signals generated by the signal generator (6), and/or a power source (8) configured to power the signal generator (6) and/or the amplifier (7).

5. System according to any of the preceding claims, wherein all the piezoelectric crystals have the same nominal thickness.

6. System according to any of the preceding claims, wherein at least one of the piezoelectric crystals have a coating, wherein the coating comprises, for example, polyurethane, polyurethane with microfillers or polyurethane with nanofillers.

7. System according to any of the preceding claims, wherein the processor comprises a communication configured to send data to an external computer.

8. Sensing arrangement comprising

a body;
a plurality of attaching means; and
a system according to any of the preceding claims, wherein each piezoelectric crystal is installed in one different point of the body by means of the attaching means.

9. Sensing arrangement according to claim 8, wherein

the body is an aerofoil comprising a leading edge, an upper surface and a lower surface;
the body comprises a main conduct which creates a fluid communication between the leading edge and an interior point of the body;
a first piezoelectric crystal is installed in the interior point;
at least a second piezoelectric crystal is installed in the upper surface of the body;
the body comprises a secondary conduct which creates a fluid communication between the interior point and the upper surface.

10. Sensing arrangement according to claim 9, wherein more than one piezoelectric crystal is installed in the upper surface of the body.

11. Sensing arrangement according to any of claims 9 or 10 when depending on claim 4, further comprising at least one heater installed in the main conduct, wherein the heater is connected to the power source (8) by means of the switch.

12. A method for detecting icing conditions around a body (12) in the sensing arrangement (1) according to any one of claims 8 to 11, the method comprising the following steps:

a) the vector network analyser (3) scans the response of the piezoelectric crystals in the frequency domain by periodically sending electric signals to the electrodes to cause acoustic waves in the piezoelectric crystals (2, 2', 2");
b) the vector network analyser (3) periodically measures a set of resonance data from the electrode pairs associated with the piezoelectric crystals (2, 2', 2") and periodically sends the sets of resonance data to the processor (4);
c) the processor (4) calculates, using the sets of resonance data, an indicator of ice accretion for each piezoelectric crystal (2, 2', 2") by comparing two consecutive sets of resonance data of the same piezoelectric crystal and detecting any change of the frequency of a resonance peak.

13. Method according to claim 12, further comprising a step
d) the processor (4) calculates, using the sets of resonance data, a value of ice accretion rate for each piezoelectric crystal (2, 2', 2"), by comparing two consecutive sets of resonance data of the same piezoelectric crystal and detecting any change between the resonance frequency value of one set and the resonance frequency value of the other set.

14. Method according to claim 13, further comprising a step
e) the processor (4) calculates, using the sets of resonance data, an indicator of the type of the icing event by using a plurality of ice accretion rates.

15. Method according to any of claims 13 or 14, further comprising a step
f) the processor (4) calculates, using the sets of resonance data, an indicator of the droplet size by using the sets of resonance data of more than one piezoelectric crystal (2, 2', 2").

Figure 1

Figure 2

Figure 3

Figure 4

Figure 5

Figure 6

Figure 7

Europäisches
Patentamt

European
Patent Office

Office européen
des brevets

# EUROPEAN SEARCH REPORT

**Application Number**

EP 24 38 2802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 357 034 A1 (CONSEJO SUPERIOR INVESTIGACION) 24 April 2024 (2024-04-24) | 1-8, 12-15 | INV. G01N29/12 |
| A | * abstract; figures * * paragraphs [0038], [0039] - [0040], [0052], [0054] - [0055], [0068], [0073] - [0076], [0083], [0122] * | 9-11 | G01N29/24 G01N29/42 G01N29/46 B64D15/20 B64D15/22 F03D80/40 |
| | ----- | | |
| X | AU 2013 201 806 A1 (BOEING CO) 9 January 2014 (2014-01-09) | 1-8, 12-15 | |
| A | * abstract; figures * * paragraphs [0031] - [0032], [0036], [0041], [0044] * | 9-11 | |
| | ----- | | |
| A | ROY SHUVO ET AL: "Smart ice detection systems based on resonant piezoelectric transducers", SENSORS AND ACTUATORS, vol. A 69, 1998, pages 243-250, XP093230888, * the whole document * | 1-8, 12-15 | |
| | ----- | | **TECHNICAL FIELDS SEARCHED (IPC)** |
| A | DEL MORAL JAIME ET AL: "A Holistic Solution to Icing by Acoustic Waves: De-Icing, Active Anti-Icing, Sensing with Piezoelectric Crystals, and Synergy with Thin Film Passive Anti-Icing Solutions", ADVANCED FUNCTIONAL MATERIALS, vol. 33, no. 15, 31 January 2023 (2023-01-31), XP093230772, DE ISSN: 1616-301X, DOI: 10.1002/adfm.202209421 * the whole document * | 1-8, 12-15 | G01N B64D G01P F03D |
| | ----- | | |
| | -/-- | | |

The present search report has been drawn up for all claims

| Place of search | Date of completion of the search | Examiner |
|---|---|---|
| Munich | 5 December 2024 | Barthélemy, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**page 1 of 2**

## EUROPEAN SEARCH REPORT

Europäisches
Patentamt
European
Patent Office
Office européen
des brevets

**Application Number**

EP 24 38 2802

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JAIME DEL MORAL ET AL: "A holistic solution to icing by acoustic waves: de-icing, active anti-icing, and sensing with piezoelectric crystals", ARXIV.ORG, CORNELL UNIVERSITY LIBRARY, 201 OLIN LIBRARY CORNELL UNIVERSITY ITHACA, NY 14853, 29 July 2022 (2022-07-29), XP091283079, * the whole document * | 1-8, 12-15 | |
| A | US 2022/196600 A1 (VEILLEUX JR ET AL) 23 June 2022 (2022-06-23) * abstract; figures 3,4 * * paragraphs [0049] - [0051] * | 9-11 | |

TECHNICAL FIELDS
SEARCHED      (IPC)

The present search report has been drawn up for all claims

| Place of search | Date of completion of the search | Examiner |
|---|---|---|
| Munich | 5 December 2024 | Barthélemy, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 38 2802

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | Publication date |
|---|---|---|---|
| EP 4357034 A1 | 24-04-2024 | EP 4357034 A1 | 24-04-2024 |
| | | ES 2931375 A1 | 28-12-2022 |
| | | US 2024399417 A1 | 05-12-2024 |
| | | WO 2022263701 A1 | 22-12-2022 |
| AU 2013201806 A1 | 09-01-2014 | AU 2013201806 A1 | 09-01-2014 |
| | | CA 2809593 A1 | 12-12-2013 |
| | | CN 103482071 A | 01-01-2014 |
| | | EP 2674361 A2 | 18-12-2013 |
| | | JP 6333522 B2 | 30-05-2018 |
| | | JP 2013256286 A | 26-12-2013 |
| | | RU 2013126712 A | 20-12-2014 |
| | | US 2013327756 A1 | 12-12-2013 |
| | | US 2016257414 A1 | 08-09-2016 |
| US 2022196600 A1 | 23-06-2022 | EP 4016088 A1 | 22-06-2022 |
| | | US 2022196600 A1 | 23-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. GONZÁLEZ et al.** Fiber Bragg Grating Sensors ice detection: Methodologies and performance. *Sensors and Actuators A: Physical*, 2022, vol. 346, 113778

- Icing Terminology. *Federal Register 24542*, 07 May 2003